# EUROPEAN PATENT APPLICATION

(11) **EP 4 761 305 A1**
(43) Date of publication of application: **17.06.2026**
(21) Application number: 23947906.6
(22) Date of filing: 07.08.2023
(51) Int. Cl.: H04W 8/08

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN)
(74) Representative: RGTH
(86) International application number: PCT/CN2023/111533
(87) International publication number: WO 2025/030325

(57) **Abstract**

Provided are a wireless communication method and a communication device. The wireless communication method comprises: a first communication device sending a first message to a second communication device, wherein the first message includes one or more pieces of the following information: first information, which is used for controlling resources of a non-PDU session, and second information, which is used for indicating the cause for establishment of a wireless connection corresponding to the first information.

## Description

### TECHNICAL FIELD

The present application relates to the field of communications, and in particular, to a wireless communication method and a communication device.

### BACKGROUND

For some terminal devices (e.g., ambient IoT devices and zero-energy terminals), the amount of data transmitted by these terminal devices is generally small due to constraints on cost and power consumption, which may render data transmission through establishing a protocol data unit (PDU) session inefficient. Therefore, for such devices, a non-PDU session manner may be considered for data transmission. Then, when data is transmitted using a non-PDU session, how to achieve differentiated control of data transmission is a problem that needs to be solved.

### SUMMARY

A wireless communication method and a communication device are provided in the present application. Various aspects of the present application will be introduced below.

In a first aspect, a wireless communication method is provided, which includes: transmitting, by a first communication device, a first message to a second communication device, where the first message includes one or more of the following information: first information, used for resource control of a non-PDU session; or second information, used to indicate a radio connection establishment cause corresponding to the first information.

In a second aspect, a wireless communication method is provided, which includes: receiving, by a second communication device, a first message transmitted by a first communication device; where the first message includes one or more of the following information: first information, used for resource control of a non-PDU session; or second information, used to indicate a radio connection establishment cause corresponding to the first information.

In a third aspect, a communication device is provided, which is a first communication device and includes: a transmitting module, configured to transmit a first message to a second communication device; where the first message includes one or more of the following information: first information, used for resource control of a non-PDU session; or second information, used to indicate a radio connection establishment cause corresponding to the first information.

In a fourth aspect, a communication device is provided, which is a second communication device and includes: a receiving module, configured to receive a first message transmitted by a first communication device; where the first message includes one or more of the following information: first information, used for resource control of a non-PDU session; or second information, used to indicate a radio connection establishment cause corresponding to the first information.

In a fifth aspect, a communication device is provided, which includes: a processor, a memory, and a communication interface. The memory is configured to store one or more computer programs, and the processor is configured to call the computer program(s) in the memory, to cause the communication device to perform a part or all of the steps in the methods in the above aspects.

In a sixth aspect, a communication system is provided in the embodiments of the present application, which includes the above-mentioned communication device. In another possible design, the system may further include other devices that interact with the communication device according to the solution provided in the embodiments of the present application.

In a seventh aspect, a computer-readable storage medium is provided in the embodiments of the present application, which has a computer program stored thereon, and the computer program causes a communication device (e.g., a first communication device or a second communication device) to perform a part or all of the steps in the methods in the above aspects.

In an eighth aspect, a computer program product is provided in the embodiments of the present application, which includes a non-transitory computer-readable storage medium having a computer program stored thereon, and the computer program is operable to cause a communication device (e.g., a first communication device or a second communication device) to perform a part or all of the steps in the methods in the above aspects. In some implementations, the computer program product may be a software installation package.

In a ninth aspect, a computer program is provided in the embodiments of the present application, which is operable to cause a communication device (e.g., a first communication device or a second communication device) to perform a part or all of the steps in the methods in the above aspects.

In a tenth aspect, a chip is provided in the embodiments of the present application, which includes a memory and a processor. The processor can call a computer program from the memory and run the computer program to perform a part or all of the steps in the methods described in the above aspects.

In the embodiments of the present application, in a case where data is transmitted in a non-PDU session manner, differentiated control may be performed on data transmission based on the first information and/or the second information. The first information and the second information are both associated with the resource control of the non-PDU session.

### BRIEF DESCRIPTION OF THE DRAWINGS

FIG. 1 is an example diagram of a system architecture of a wireless communication system to which the embodiments of the present application are applicable.
FIG. 2 is an example diagram of an AIoT network architecture.
FIG. 3 is a schematic flowchart of a wireless communication method provided by an embodiment of the present application.
FIG. 4 is a schematic flowchart of a wireless communication method provided by another embodiment of the present application.
FIG. 5 is a schematic flowchart of a wireless communication method provided by yet another embodiment of the present application.
FIG. 6 is a schematic flowchart of a wireless communication method provided by yet another embodiment of the present application.
FIG. 7 is a schematic block diagram of a communication device provided by an embodiment of the present application.
FIG. 8 is a schematic block diagram of a communication device provided by another embodiment of the present application.
FIG. 9 is a schematic block diagram of a communication apparatus provided by the embodiments of the present application.

### DETAILED DESCRIPTION

### Communication system architecture

The technical solutions of the embodiments of the present application may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a LTE frequency division duplex (FDD) system, a LTE time division duplex (TDD) system, a new radio (NR) system, an evolution system of an NR system, an LTE-based access to unlicensed spectrum (LTE-U) system, an NR-based access to unlicensed spectrum (NR-U) system, a non-terrestrial communication network (NTN) system, a terrestrial networks (TN) system, a universal mobile telecommunication system (UMTS), a wireless local area network (WLAN), a wireless fidelity (WiFi), and a 5th-generation (5G) communication system. The technical solution provided in the present application may also be applied to other communication systems, such as a future communication system, a 6th-generation mobile communication system, or a satellite communication system.

Generally speaking, conventional communication systems support a limited number of connections and are easy to implement. However, with the development of the communication technology, mobile communication system will support not only the conventional communication, but also, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems.

The communication system in the embodiments of the present application may be applied to a carrier aggregation (CA) scenario, a dual connectivity (DC) scenario, or a standalone (SA) network deployment scenario.

The communication system in the embodiments of the present application may be applied to an unlicensed spectrum, and the unlicensed spectrum may also be considered as a shared spectrum. Alternatively, the communication system in the embodiments of the present application may be applied to a licensed spectrum, and the licensed spectrum may also be considered as a dedicated spectrum.

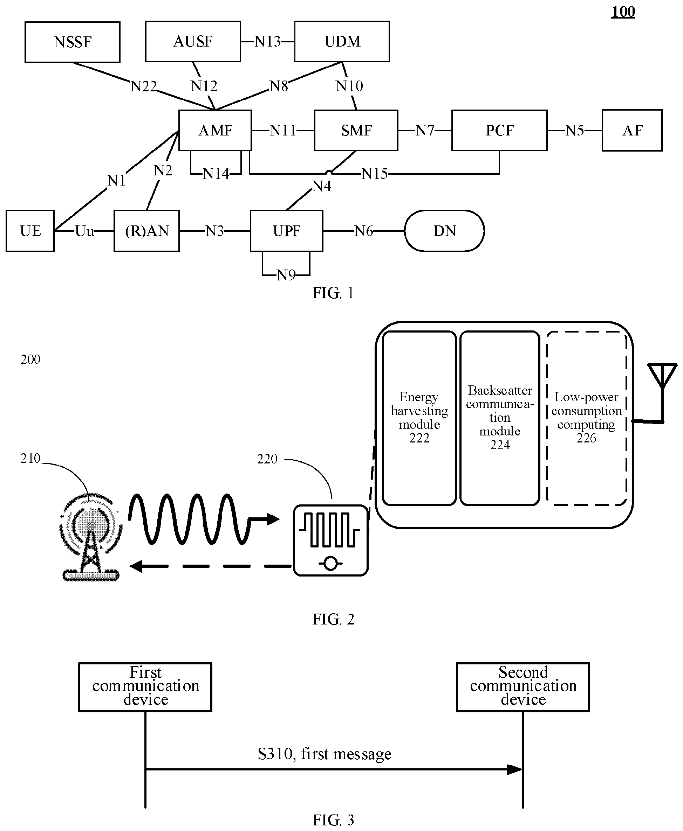

FIG. 1 shows an example diagram of a system architecture of a wireless communication system to which the embodiments of the present application are applicable. In an example where the communication system is a 5G system architecture, the wireless communication system may include multiple network elements, such as a terminal device, an access network (AN) device, a UPF network element, an access and mobility management function (AMF) network element, a session management function (SMF) network element, a policy control function (PCF) network element, and an application function (AF) network element. The wireless communication system may further include a DN or the like.

The functions of each part or network element involved in the wireless communication system in the 5G network will be described below as an example.

Terminal device: the terminal device may also be referred to as a user equipment (UE), an access terminal, a user unit, a user station, a mobile radio station, a mobile station (MS), a mobile terminal (MT), a remote station, a remote terminal, a mobile device, a user terminal, a terminal, a wireless communication device, a user agent or a user apparatus, or the like. The terminal device in the embodiments of the present application may be a device that provides voice and/or data connectivity to users and may be used to connect people, objects and machines, such as a handheld device with a radio connection function, a vehicle-mounted device. The terminal device in the embodiments of the present application may be a mobile phone, a Pad, a laptop computer, a tablet computer, a mobile internet device (MID), a wearable device, a vehicle device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home.

Access network device: the access network device may be used to provide network access functions for authorized terminal devices in a specific area, and may use transmission channels of different qualities based on the level of the terminal device, service requirements, etc. Access network device may manage wireless resources, provide access services for terminal devices, and then complete the forwarding of control signals and data between terminal devices and the core network.

The access network device may be a device in a wireless network. The access network device may also be referred to as a radio access network (RAN) device or a network device. For example, the access network device may be a base station. The access network device in the embodiments of the present application may refer to a radio access network (RAN) node (or device) that connects a terminal device to a wireless network. Base station may broadly cover various names as follows, or be replaced with the following names, such as a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), or a positioning node. The base station may be a macro base station, a micro base station, a relay node, a donor node, or the like, or a combination thereof. The base station may also refer to a communication module, modem or chip configured in the aforementioned device or apparatus. A base station may also be a mobile switching center, a device that performs base station functions in device-to-device (D2D), vehicle-to-everything (V2X), and machine-to-machine (M2M) communications, a network-side device in a 6G network, or a device that performs base station functions in future communication systems. The base station may support networks of the same or different access technologies. The specific technology and specific device form adopted by the access network device are not limited in the embodiments of the present application.

Base stations may be fixed or mobile. For example, a helicopter or drone may be configured to act as a mobile base station, and one or more cells may move based on the location of the mobile base station. In other examples, a helicopter or drone may be configured to function as a device communicating with another base station.

In some deployments, the access network device in the embodiments of the present application may refer to a CU or a DU, or the access network device includes a CU and a DU. The gNB may also include an AAU.

The Access network device and the terminal device may be deployed on land, including indoor or outdoor, handheld or vehicle-mounted devive; or deployed on water; or deployed in the air on an aircraft, a balloon and a satellite. The scenarios in which the access network device and the terminal device are located are not limited in the embodiments of the present application.

UPF network element: the UPF is the user plane function in the core network, which is responsible for forwarding and receiving user data (such as service data flow) in terminal devices. The UPF may connect to the access network device (such as a base station) and the external data network for data transmission. For example, the UPF may receive user data from the DN and transmit it to the terminal device through the access network device; alternatively, the UPF may also receive user data from the terminal device through the access network device and then forward it to the DN. The transmission resources and scheduling functions that provide services to terminal devices in UPF are managed and controlled by an SMF. In some embodiments, the UPF may be divided into an intermediate-UPF (I-UPF) and an anchor-UPF (A-UPF). The I-UPF is connected to the access network, the A-UPF is the UPF of the session anchor point, and the A-UPF may also be called a PDU session anchor (PSA).

AMF network element: the AMF is the mobility management function in the core network. The AMF may be used to implement other functions of the mobility management entity (MME) in addition to session management, such as lawful interception or access authorization (or authentication). In some embodiments, in addition to performing mobility management on terminal devices, the AMF may also be responsible for forwarding session management related messages between the terminal device and the SMF.

SMF network element: the SMF is the session management function in the core network. The SMF is mainly responsible for session management, Internet protocol (IP) address allocation and management of terminal devices, selection of endpoints for manageable user plane functions, policy control, or charging function interfaces, downlink data notification, and configuration of routing information for user plane functions.

PCF network element: the PCF is the policy management function in the core network, which is responsible for formulating policies related to mobility management, session management, billing, etc. for terminal devices. Specifically, the PCF may provide policy rule information to functional network elements of the control plane (such as AMF network element, and SMF network element) to manage and control the mobility management and session management of terminal devices.

AF network element: the AF mainly supports interaction with the 3rd generation partnership project (3GPP) core network to provide services, such as influencing data routing decisions, policy control functions, or providing some third-party services to the network side. In other words, the AF may be mainly used to convey the requirements on the network side at the application side. In some embodiments, the AF may be an internal application of the operator, such as IP multimedia subsystem (IMS) technology. In some embodiments, the AF may be understood as a third-party server, for example, an application server in the Internet, which provides relevant service information, including providing Quality of Service (QoS) requirement information corresponding to the service to the PCF, and transmitting user plane data information of the service to the A-UPF. In some embodiments, the AF may also be a content provider (CP). In some embodiments, if the AF is an internal AF of the operator and is located within a same trusted domain with other network functions (NFs), the AF can directly cominicate with and access the other NFs; if the AF is not located within the trusted domain, the AF needs to access other NFs through other network elements (such as, an NEF network element below).

DN: the DN refers to a network that may be used to provide data transmission. The DN may be a private network, such as a local area network, or the DN may be an external network not controlled by an operator, such as the Internet. The DN may also be a proprietary network jointly deployed by operators, such as a network that provides IMS services.

It should be understood that the above various network elements in the core network may also be referred to as functional entities, which is not limited in the embodiments of the present application. For example, the UPF network element may also be referred to as a UPF entity, the AMF network element may also be referred to as an AMF entity. It should also be understood that in some embodiments, a xx network element or a xx functional entity may also be shortly referred to as xx, for example, the UPF network element (or the UPF entity) may be referred to as a UPF, and the AMF network element (or the AMF entity) may be referred to as an AMF. To facilitate description, the xx (such as UPF, or AMF) mentioned in the embodiments of the present application may refer to xx network element or xx entity, which will not be repeated hereafter.

Optionally, the wireless communication system may further include a unified data management (UDM) network element, an authentication service function (AUSF) network element, a network slice selection function (NSSF) network element, a network exposure function (NEF) network element, a network data analytics function (NWDAF) and other network elements, which is not limited in the embodiments of the present application.

The UDM network element is a subscription database in the core network, which may be used to generate and store user subscription data in the network (e.g., a 5G network) and also has functions such as manage authentication data. The UDM network element may support interaction with external third-party servers. The AUSF network element may be used to receive a request for authenticating the terminal device's identity from the AMF, and may request a key from the UDM and then forward the issued key to the AMF for authentication process. The NSSF network elements may be used for network slicing selection. The NEF network elements may be responsible for managing the network data exposure to external parties for 5G network elements. External untrusted applications need to access internal data of the core network via NEF to ensure the security of the 3GPP network. In some embodiments, the NEF network element may also provide functions such as QoS capability exposure to external applications, event subscription, and AF request distribution. The NWDAF network element may collect data from various network elements and network management systems in the core network, to perform big data statistics, big data analytics, or intelligent data analytics, which enables the derivation of network-side analysis results or predictive data, thereby assisting various network elements in exercising more effectively control over terminal devices based on the data analysis results.

In the wireless communication system shown in FIG. 1, communication between various components or network elements may be achieved through interfaces. For example, the terminal device may establish an access stratum connection with the AN through a Uu interface to exchange access stratum messages and wireless data transmission; the terminal device may establish a non-access stratum (NAS) connection with the AMF through an N1 interface to exchange NAS messages; the AN may connect to the AMF through an N2 interface to transmit radio bearer control information from the core network side to the AN; the UPF may transmit data with the AN through anN3 interface and with the DN through an N6 interface. For interfaces connecting other components or network elements, reference may be made to FIG. 1, which will not be repeated in detail here.

It should be understood that the network elements shown in FIG. 1, such as terminal device, access network device, SMF, and PCF are merely names, and such names do not impose limitations on the devices themselves. In 5G networks and other future networks, the network elements corresponding to terminal devices, access network devices, SMFs, PCFs, etc., may have other names, which is not limited in the embodiments of the present application.

It should be understood that the above-mentioned communication system is described through the example of a 5G system. Certainly, the present application may also be applied to other 3GPP communication systems, such as the 4G communication system, and future 3GPP communication systems, which is not limited in the embodiments of the present application.

It should be understood that all or part of the functions of the communication devices in the present application may also be implemented through software functions running on hardware, or through virtualization functions instantiated on a platform (such as a cloud platform).

It should be understood that the system architecture described in the embodiments of the present application is intended to more clearly illustrate the technical solutions of the embodiments of the present application, and does not constitute a limitation on the technical solutions provided by the embodiments of the present application. Those skilled in the art will know that with the evolution of network architecture, the embodiments of the present application may also be applicable to similar technical problems.

With the development of wireless communication technology, there is a growing desire to integrate the wireless communication system with various vertical industries such as logistics, manufacturing, transportation, and energy. For example, the wireless communication system may be integrated with an industrial wireless sensor network (IWSN). In another example, the wireless communication system may be integrated with smart logistics and smart warehousing. In yet another example, the wireless communication system may be integrated with the smart home network. However, in these industries, the terminal device is often required to have the characteristics such as low cost, compact size (e.g., ultra-thin), maintenance-free, and long life. Therefore, in order to meet the above conditions, some low-power devices, zero-energy devices or ambient Internet of things (AIoT) devices are introduced into the wireless communication system. For example, the terminal device shown in FIG. 1 may be an AIoT device or a zero-energy device.

In some embodiments, an AIoT device may also be considered as a type of zero-energy device. For example, from the perspective of power supply manners, zero-energy devices can be categorized into AIoT devices, battery-free terminals, maintenance-free terminals, etc. For ease of understanding, AIoT devices will be introduced below.

### AIoT devices

In some embodiments, an AIoT device may also be referred to as an AIoT terminal, an ambient energy-enabled IoT device, an ambient harvesting IoT device, etc.

AIoT devices may work in the AIoT network. The AIoT network may be considered as a type of wireless communication network (wireless communication technology) suitable for short distance and low rate. FIG. 2 shows an example of an AIoT network. As shown in FIG. 2, the AIoT network may include a first device 210 and a second device 220. In some embodiments, the second device 220 may be an AIoT device. In some embodiments, the first device 210 may be a network device (e.g., an access network device).

In some implementations, the AIoT device may be an electronic tag, and correspondingly, the network device may be a reader in a radio frequency identification (RFID) system, which is configured to read and/or modify the content in the electronic tag.

The first device 210 may transmit a wireless power supply signal to the second device 220 to power the second device 220. Correspondingly, the second device 220 may transmit data to the first device 210 via a backscattered signal. In some embodiments, the wireless power supply signal may further carry data or control information transmitted by the first device 210 to the second device 220. Certainly, the above-mentioned wireless power supply signal may be used only for power supply, which is not limited in the embodiments of the present application.

It should be noted that, FIG. 2 exemplarily shows one first device 210 and one second device 220. Optionally, the AIoT network may include other quantities of first devices and/or second devices, which is not limited in the embodiments of the present application.

The application scenarios of the AIoT network are not limited in the embodiments of the present application. Exemplarily, the AIoT network may be used in scenarios such as wireless industrial sensing networks, smart agriculture, smart warehousing and logistics, and smart homes.

A significant advantage of the AIoT devices is that they do not require a installed power supply. As an implementation, the AIoT device can leverage radio frequency energy harvesting technology, backscatter technology and low-power computing technology to achieve the device node's advantage in not requiring power supply. On this basis, the AIoT device typically includes an energy harvesting module, a backscatter communication module, and a low-power computing module. Referring again to FIG. 2, the second device 220 may include an energy harvesting module 222 and a backscatter communication module 224. In some embodiments, the second device 220 may further include a low-power computing module 226. The modules included in the second device will be introduced below.

The energy harvesting module 222 is used to harvest energy. In some implementations, the energy harvesting module 222 may harvest energy via a wireless power supply signal transmitted by the first device 210. The wireless power supply signal may be a "radio frequency signal" transmitted by the network device. Therefore, the energy harvesting module 222 may also be referred to as a "radio frequency energy harvesting module".

The key function of the energy harvesting module 222 in harvesting RF energy is to convert RF energy into direct current. The energy harvested may be stored in batteries or capacitors, or may be directly used to drive logic circuits, digital chips, or sensor devices, thereby enabling subsequent functions and applications such as modulating and transmitting backscatter signals, and harvesting and processing sensor information.

The backscatter communication module 224 may be used for the second device 220 to perform backscatter communication with the first device 210. As an implementation, after receiving the wireless signal transmitted by the first device 210, the second device 220 may modulate the wireless signal through the backscatter communication module 224 and transmit the modulated signal.

The low-power computing module 226 may be configured to provide a computing function, e.g., data processing, for the second device 220.

With the development of communication systems, some communication systems (e.g., 5G systems) can support the access of AIoT devices to the network. Exemplarily, the communication systems can support the access of AIoT devices to the network in the following scenarios: scenarios with extreme environments and unsuitable for ordinary terminal devices to operate, scenarios requiring low-power and low-cost terminal devices, and scenarios requiring battery-free terminal devices.

In AIoT communication technology, AIoT terminals can be categorized into three types based on their energy sources and power usage manners: passive AIoT terminals, semi-passive AIoT terminals and active AIoT terminals.

### 1. Passive AIoT terminal

The Passive AIoT terminal usually does not require the built-in battery. When the passive AIoT terminal approaches a network device and the passive zero-energy terminal enters the near-field region formed by radiation of an antenna of the network device, the antenna of the passive AIoT terminal can generate an induced current through electromagnetic induction. The induced current can power the passive AIoT terminal, drive the low-power chip circuit of the passive AIoT terminal, thereby achieving operations such as forward link signal demodulation, reverse link signal modulation. For the backscatter link, the passive AIoT terminal can employ a backscatter manner for signal transmission.

Based on the above introduction, it can be seen that the passive AIoT terminal does not require a built-in battery to drive it to operate, either in a transmission process based on the forward link or in a transmission process based on the reverse link, which makes the passive AIoT terminal a true AIoT terminal.

Since the passive AIoT terminal does not require the battery, the radio frequency circuit and baseband circuit of the passive AIoT terminal are very simple. For example, the passive AIoT terminal device may not require devices such as a low-noise amplifier (LNA), a power amplifier (PA), and an analog-to-digital converter (ADC). As a result, the passive AIoT terminal has many advantages such as small size, light weight, low cost, and long service life.

In some implementations, the characteristics of passive AIoT terminals may include one or more of: requiring no battery, the ability to harvest power from the ambient environment (e.g., radio waves, solar energy, wind energy, mechanical kinetic energy), absence of a universal subscriber identify module (USIM) card, and the ability to store a certain amount of energy from the ambient environment. It should be noted that the amount of energy a passive AIoT terminal can store from the ambient environment is very limited. Therefore, the passive AIoT terminal support less functional logic compared to mobile phone-type terminals.

### 2. Semi-passive AIoT terminal

The semi-passive AIoT terminal is also not equipped with a conventional battery. Instead, the semi-passive AIoT terminal can employ an energy harvesting module (e.g., RF energy harvesting module) to harvest radio wave energy, and store the harvested energy in a power storage unit (e.g., a capacitor). Once the energy storage unit acquires energy, the power storage unit can supply power to the semi-passive AIoT terminal to drive its low-power chip circuit to perform tasks such as demodulating the forward link signal and modulating the reverse link signal. For the backscatter link, the semi-passive AIoT terminal utilize a backscatter manner for signal transmission.

Based on the above introduction, it can be seen that the semi-passive AIoT terminal does not require a built-in battery to drive it to operate, either in a transmission process based on the forward link or in a transmission process based on the reverse link. Although the semi-passive AIoT terminal utilizes the energy stored in the capacitor during its operation, this energy originates from the radio waves energy harvested by the energy harvesting module. Therefore, the semi-passive AIoT terminal is also a true AIoT terminal.

The semi-passive AIoT terminal inherits many advantages of the passive AIoT terminal, or in other words, the semi-passive AIoT terminal also have many advantages such as small size, light weight, low cost and long service life.

### 3. Active AIoT Terminal

The active AIoT terminal has a built-in battery. The battery can supply power to the active AIoT terminal to drive its low-power chip circuit to realize operations such as demodulating the forward link signal, and modulating the reverse link signal. However, for the backscatter link, the active AIoT terminal employs the backscatter manner for signal transmission. Therefore, the zero-energy characteristic of the active AIoT terminal is manifested through the fact that the signal transmission in the reverse link does not consume the terminal's own power, thanks to the application of the backscatter manner transmission.

For the active AIoT terminal, it may be powered by the built-in battery, thereby increasing the communication distance of the active AIoT terminal and improving the communication reliability. Therefore, active AIoT terminals are suitable for scenarios with relatively high requirements on communication distance, reading latency, etc.

In some implementations, the active AIoT terminal may be an electronic tag, and the network device may be an RFID reader. In this case, the built-in battery can supply power to the RFID chip in the electronic tag to increase the reading/writing distance between the RFID reader and the electronic tag. In addition, the built-in battery can supply power to the RFID chip in the electronic tag to shorten the reading/writing latency between the RFID reader and the electronic tag, which is beneficial to improving the communication reliability. However, the embodiments of the present application are not limited thereto. For example, the above-mentioned active AIoT terminal may also be an ordinary terminal device.

In some communication systems (e.g., 5G systems), the registration procedure of a terminal device is managed on a per-terminal device basis. For example, in the above registration procedure, each terminal device may be allocated a temporary identifier, which are used for maintaining the connection state or mobility management state of each terminal device.

In some implementations, the registration procedure of the terminal device may be performed based on NAS messages. For example, the state transition between the mobility management states of the terminal device may be performed based on NAS messages. Data transmission between a terminal device and a data network is generally performed via a PDU session established on the user plane. Consequently, the terminal device needs to establish a PDU session in order to transmit or receive data. For example, even if the terminal device only transmits or receives a small amount of data, establishing a PDU session is still necessary.

As can be seen from the above description, a communication system (e.g., a 5G system) can provide data transmission services between terminal devices and the data network via PDU sessions. Some communication systems can also provide differentiated Quality of Service (QoS) flow guarantees for different service data streams transmitted within the same PDU session, based on different service requirements. As an implementation, nodes in the communication system may implement the resource control or resource scheduling of the PDU session according to QoS parameters. For example, the terminal device, an access network device and a UPF all can implement the resource control or resource scheduling of the PDU session according to QoS parameters.

The QoS parameters are not limited in the embodiments of the present application. Exemplarily, the QoS parameters may include one or more of the following parameters: a 5G QoS identifier (5QI), an allocation and retention priority (ARP), or a rate control parameter.

However, for some terminal devices, such as the AIoT devices mentioned above, the amount of data transmitted by such terminal devices is generally small due to constraints on cost and power consumption, which may render data transmission through establishing PDU sessions inefficient. For example, in an AIoT network, to minimize power consumption during communication, the data length reported by AIoT devices is generally relatively small. In this case, it is inefficient for AIoT devices to transmit data by establishing PDU sessions.

To address the issues above, one potential solution is to consider using a non-PDU session manner for data transmission. However, when data is transmitted using a non-PDU session, the existing QoS control mechanisms cannot be applied to achieve differentiated control of data transmission. Therefore, in a case where data is transmitted using a non-PDU session, how to achieve differentiated control of data transmission becomes a problem that needs to be solved.

On this basis, a wireless communication method and a communication device are provided in the embodiments of the present application, to achieve differentiated control of data transmission in the non-PDU session scenario. For example, a core network, an access network device or a terminal device can control data transmission in the non-PDU session scenario as needed, thereby implementing differentiated control specific to non-PDU sessions.

The embodiments of the present application may be applied to any scenario in which data is transmitted in a non-PDU session manner. It should be understood that the "non-PDU session" mentioned in the embodiments of the present application may refer to data transmission manners other than transmitting data by establishing a PDU session. In other words, data transmission in a "non-PDU session" manner may refer to data transmission without establishing a PDU session. The implementation of data transmission in a non-PDU session manner is not specifically limited in the embodiments of the present application. For example, as an implementation, data transmission in a non-PDU session manner may refer to data transmission between communication devices via NAS messages or NAS signaling, or data transmission in a non-PDU session manner may refer to data transmission between communication devices via a control plane. As another implementation, data transmission in a non-PDU session manner may refer to data transmission between communication devices through the exchange of short messages. During the transmission of short messages, an end-to-end service path may not be established (i.e., a PDU session may not be established).

In some embodiments, the embodiments of the present application may be applied to scenarios where a core network (such as a network element in the core network) performs differentiated control on non-PDU sessions.

In some embodiments, the embodiments of the present application may be applied to scenarios where a terminal device performs differentiated control on non-PDU sessions.

In some embodiments, the embodiments of the present application may be applied to scenarios where an access network device performs differentiated control on non-PDU sessions.

The method embodiments of the present application will be described below with reference to the accompanying drawings. FIG. 3 is a schematic flowchart of a wireless communication method provided by an embodiment of the present application. The method illustrated in FIG. 3 will be introduced from the perspective of the interaction between a first communication device and a second communication device. In order to facilitate understanding, the first communication device and the second communication device in the embodiments of the present application will be first introduced below.

In the embodiments of the present application, the first communication device and the second communication device are respectively a transmitting terminal and receiving terminal of a first message. The first communication device is a transmitting terminal or initiating terminal of the first message, and the second communication device is a receiving terminal of the first message. For a detailed introduction to the first message, please refer to following contents, which will not be repeated here for the sake of brevity.

The first communication device is not specifically limited in the embodiments of the present application, as long as it is capable of transmitting the first message. Several possible implementations of the first communication device will be exemplarily described below.

In some embodiments, the first communication device may be a network element in a core network. That is, the first communication device may be a network element capable of transmitting the first message in the core network. Exemplarily, the first communication device may be a network element in the core network used for the registration of terminal devices.

Taking the NR system as an example, the first communication device may be an AMF or a UDM in the core network. Taking the LTE system as an example, the first communication device may be a mobility management entity (MME) in the core network. Certainly, the embodiments of the present application are not limited thereto. In some possible implementations, the first communication device may be implemented though the other network elements in the core network, such as an SMF, or an PCF. Alternatively, the first communication device may also be a network element in the core network of a future communication system, such as a network element capable of transmitting the first message in the future communication system, or a network element used for the registration of terminal devices in the future communication system.

In some embodiments, the first communication device may be a terminal device. That is, in some embodiments, the terminal device may transmit the first message.

In addition to the possible implementations of the first communication device listed above, the first communication device may be implemented through other network elements, nodes, or devices, which are not limited in the embodiments of the present application. For example, the first communication device may also be a third-party server or a third-party application. As a possible implementation, the third-party server or third-party application may transmit the first message to a network element in the core network to provide it with the information carried in the first message (e.g., the first information and/or second information mentioned below).

In the embodiments of the present application, the second communication device may receive the first message transmitted by the first communication device. The second communication device is not specifically limited in the embodiments of the present application, as long as it is capable of receiving the first message transmitted by the first communication device. Several possible implementations of the second communication device will be exemplarily described below.

In some embodiments, the second communication device may be a network element in the core network. That is, the second communication device may be a network element capable of receiving the first message in the core network. Exemplarily, the second communication device may be a network element in the core network capable of communicating with an external server or application, or the second communication device may be a node or network element in the core network used to transmit data in a non-PDU session manner.

Taking the NR system as an example, the second communication device may be an NEF, or an AMF in the core network. Certainly, the embodiments of the present application are not limited thereto. In some possible implementations, the second communication device may be implemented through other network elements in the core network, such as an AIoT-related network element (e.g., AIoT NF) in the core network. Alternatively, the second communication device may be implemented through other nodes or network elements used for transmitting data in a non-PDU session manner in the core network. For example, in a case where an SMF is a transmission node in a non-PDU session, the second communication device may be the SMF. Alternatively, the second communication device may also be a network element in the core network of the future communication system, such as a network element capable of receiving the first message in the future communication system, a network element capable of communicating with an external server or application in the future communication system, or a node or network element used to transmit data in a non-PDU session manner in the future communication system.

In some embodiments, the second communication device may be a terminal device. That is to say, in some embodiments, the terminal device can receive the first message.

In some embodiments, the second communication device may be an access network device. That is to say, the access network device can receive the first message transmitted by other nodes, network elements or devices. Taking the NR system as an example, the second communication device may be a gNB. Taking the LTE system as an example, the second communication device may be an eNB.

To facilitate understanding, several specific examples of the first communication device and the second communication device will be given below. It should be understood that the following examples are not intended to limit the technical solution of the present application to interaction only between the following communication devices.

In some embodiments, the first communication device and the second communication device may be network elements in the core network. As an example, the first communication device may be an AMF, and the second communication device may be an NEF or an AIoT NF. As another example, the first communication device may be a UDM, and the second communication device may be an AMF. As another example, the first communication device may be an AMF, and the second communication device may be an SMF (for example, the SMF serves as a node for transmitting data in a non-PDU session).

In some embodiments, the first communication device may be a network element in a core network, and the second communication device may be a terminal device. As an example, the first communication device may be an AMF, and the second communication device may be a terminal device. As another example, the first communication device may be an SMF, and the second communication device may be a terminal device.

In some embodiments, the first communication device may be a third-party server or a third-party application, and the second communication device may be a network element in the core network. As an example, the first communication device may be a third-party server, and the second communication device may be an AMF. In some embodiments, the third-party server or third-party application may be an entity corresponding to a database of a service provider and capable of providing service-related information.

In some embodiments, the first communication device may be a terminal device, and the second communication device may be an access network device. As an example, the first communication device may be a terminal device, and the second communication device may be a gNB.

In some embodiments, the first communication device may be a network element in the core network, and the second communication device may be an access network device. As an example, the first communication device may be an AMF, and the second communication device may be an access network device.

Based on the introduction of the first communication device and the second communication device, the method shown in FIG. 3 will be described below. The method shown in FIG. 3 may include step S310.

In step S310, the first communication device transmits a first message to the second communication device.

In the embodiments of the present application, the first message may be any message exchanged between the first communication device and the second communication device. The embodiments of the present application does not impose limitations on the first message, as long as the first message includes information related to resource control or resource scheduling of a non-PDU session, such as the first information and/or second information mentioned below .

In some embodiments, the first message may be a message used for establishing a data transmission channel. For example, the first message may be used for establishing a data transmission channel corresponding to a non-PDU session.

As an implementation, the first communication device may transmit the first message to the second communication device to establish a data transmission channel corresponding to a non-PDU session. In this case, both the first communication device and the second communication device may be network elements in the core network. As an example, the first communication device may be a node, network element or device (e.g., AMF) that initiates a request to establish a data transmission channel, and the second communication device may be a node, network element or device on a transmission path of the non-PDU session, or the second communication device may be a node, network element or device on the data transmission channel based on the non-PDU session. For example, the second communication device may be an NEF, an AIoT NF, or other nodes, network elements, or devices on the transmission path of the non-PDU session.

The type (or granularity) of the data transmission channel corresponding to the non-PDU session is not specifically limited in the embodiments of the present application. Exemplarily, the data transmission channel may include one or more of the following: a data transmission channel for a terminal device, a data transmission channel for a terminal device group (e.g., a first terminal device group), and a data transmission channel for a service (e.g., a first service).

In an example where the data transmission channel is the data transmission channel for the terminal device, once established, the data transmission channel can be used to transmit data of the terminal device, e.g., transmit the data of the terminal device in a non-PDU session manner.

In an example where the data transmission channel is the data transmission channel for the first terminal device group, once established, the data transmission channel can be used to transmit data of the first terminal device group, e.g., transmit the data of the first terminal device group in a non-PDU session manner.

In an example where the data transmission channel is the data transmission channel for the first service, once established, the data transmission channel can be used to transmit data of the first service, e.g., transmit the data of the first service in a non-PDU session manner.

In some embodiments, the first message may be a message related to the registration of a terminal device. For example, the first message may be a message used to indicate the registration result of a terminal device, such as a registration accept message.

As an implementation, the first communication device may transmit the first message to the second communication device to indicate the registration result of a terminal device. In this case, the first communication device may be a network element in the core network, and the second communication device may be a terminal device. Alternatively, the first communication device may be a network element in the core network, and the second communication device may be an access network device. As an example, the first communication device may be a core network element (e.g., an AMF) that receives a registration request from a terminal device or determines a registration result of the terminal device, and the second communication device may be a device (e.g., a terminal device) that initiates a registration request for the terminal device or receives the registration result of the terminal device.

In some embodiments, the first message may be a message used for establishing a radio connection (e.g., an RRC connection, an RRC reconnection), or in other words, the first message may be a message related to establishing a radio connection with a terminal device. For example, the first message may be a radio connection establishment request message.

As an implementation, the first communication device may transmit the first message to the second communication device to request establishment of a radio connection. In this case, the first communication device may be a terminal device, and the second communication device may be an access network device.

In some embodiments, the first message may be a message indicating service-related information. For example, the first message may be a message used to indicate information such as a service class or service level (e.g., first information mentioned below).

As an implementation, the first communication device may transmit the first message to the second communication device to indicate service-related information. In this case, both the first communication device and the second communication device may be network elements in the core network. Alternatively, the first communication device may be a third-party server or a third-party application (e.g., an entity corresponding to a database of a service provider), and the second communication device may be a network element in the core network. As an example, the first communication device may be a requester of service-related information (e.g., an AMF), and the second communication device may be a provider of service-related information (e.g., a UDM, or a third-party server).

In addition to the implementation forms of the first message listed above, the first message may also be other messages including information related to resource control or resource scheduling of non-PDU sessions.

The granularity of the first message is not limited in the embodiments of the present application. As an implementation, the first message may be associated with a terminal device, or in other words, the granularity of the first message may be per terminal device (UE) or per device. As another implementation, the first message may be associated with a UE group, or in other words, the granularity of the first message may be a terminal device group (UE group) or device group to which the terminal device belongs. As yet another implementation, the first message may be associated with a service, or in other words, the granularity of the first message may be per service. However, the embodiments of the present application are not limited thereto. For example, the granularity of the first message may be multiple services.

In some embodiments, the granularity of the first message may also be understood as the granularity of the first information and/or second information included in the first message, which is not limited in the present application.

In some embodiments, the first message may carry a corresponding identifier to indicate the granularity of the first message. For example, in a case where the granularity of the first message is per UE or per device, the first message may carry a UE ID or a device ID to indicate that the granularity of the first message is per UE or per device. Alternatively, in a case where the granularity of the first message is UE group level, the first message may carry a group ID or multiple UE IDs to indicate that the granularity of the first message is UE group or device group level. Alternatively, in a case where the granularity of the first message is per service, the first message may carry service information to indicate that the granularity of the first message is per service.

In some embodiments, the first message may include the first information and/or the second information. In some embodiments, the first information and/or the second information may be associated with resource control of a non-PDU session. The first information and the second information will be introduced below. The first information will be introduced first.

The first information may be used for resource control of a non-PDU session. In some embodiments, controlling the resources for the non-PDU session facilitates differentiated control of data transmission through the non-PDU session. For example, core network elements, terminal devices, access network devices, can achieve differentiated control of the data transmission based on the non-PDU session by controlling the resources for the non-PDU session.

In some embodiments, the use of the first information for resource control of the non-PDU session may include one or more of the following: performing access control for the non-PDU session, or performing resource allocation or resource scheduling for the non-PDU session.

As an example, the first information may be used for access control of the non-PDU session. For example, the first information may be used for determining whether to permit a terminal device to access the non-PDU session. Alternatively, the first information may be used for determining the terminal device(s) (e.g., number, specific terminal devices) or terminal device group permitted to access the non-PDU session. As another alternative, the first information may be used for determining, for the first service (e.g., a certain service or certain services), the terminal device(s) or terminal device group permitted to access the non-PDU session.

As another example, the first information may be used for resource allocation or resource scheduling of the non-PDU session. In other words, the first information may be used for allocating or scheduling resources for the non-PDU session. For example, the first information may be used for determining which terminal device or devices are permitted to use the resources for the non-PDU session for data transmission.

As yet another example, the first information may be used for access control and resource allocation of the non-PDU session.

In some embodiments, the "access the non-PDU session" mentioned in the embodiments of the present application may be understood as accessing a node, network element, or device on the transmission path of the non-PDU session. For example, "the first information is used for determining whether to permit a terminal device to access the non-PDU session" may be understood as that the first information is used for determining whether to permit the terminal device to access a node (such as an NEF, or an AIoT NF) on the transmission path of the non-PDU session. In another example, "the first information is used for determining the terminal device(s) or terminal device group permitted to access the non-PDU session" may be understood as that the first information is used for determining the terminal device(s) or terminal device group permitted to access a node on the transmission path of the non-PDU session.

In some embodiments, the term "access the non-PDU session" mentioned in the embodiments of the present application may be understood as accessing a service corresponding to the non-PDU session. For example, "the first information is used for determining whether to permit a terminal device to access the non-PDU session" may be understood as that the first information is used for determining whether to permit the terminal device to access the service corresponding to the non-PDU session (e.g., the first service). In another example, "the first information is used for determining the terminal device(s) or terminal device group permitted to access the non-PDU session" may be understood as that the first information is used for determining the service corresponding to the non-PDU session that is permitted to access.

In some embodiments, the first information may be used for access control and/or resource allocation of the non-PDU session, and used to indicate whether to permit a terminal device to access the non-PDU session. For example, if the first information corresponds to a terminal device, the first information may be used for access control and/or resource allocation of the non-PDU session, and used to indicate whether to permit the terminal device to access the non-PDU session.

In some embodiments, the first information may be used for access control and/or resource allocation of the non-PDU session, and the first information is used to indicate terminal device(s) in the terminal device group (e.g., the first terminal device group) that are permitted to access the non-PDU session. For example, in a case where the first information corresponds to the terminal device group, the first information may be used for access control and/or resource allocation of the non-PDU session, and used to indicate the terminal device(s) in the terminal device group that are permitted to access the non-PDU session.

In some embodiments, the first information may be used for access control and/or resource allocation of the non-PDU session, and used to indicate the terminal device(s) or terminal device group permitted to access the non-PDU session for the first service. For example, in a case where the first information corresponds to the first service, the first information may be used for access control and/or resource allocation of the non-PDU session, and used to indicate the terminal device(s) or terminal device group permitted to access the non-PDU session for the first service.

The embodiments of the present application do not impose limitations on how the first information indicates whether to perform access control and/or resource allocation for the non-PDU session. As a possible implementation, the first information may use one bit to indicate whether to perform access control and/or resource allocation for the non-PDU session. For example, a value of "1" for the first information may indicate to perform access control and/or resource allocation for the non-PDU session, and a value of "0" for the first information may indicate to perform access control and/or resource allocation for the non-PDU session. Alternatively, a value of "0" for the first information may indicate to perform access control and/or resource allocation for the non-PDU session, and a value of "1" for the first information may indicate to perform access control and/or resource allocation for the non-PDU session. As another possible implementation, the first information may use multiple bits (two or more) to indicate whether to perform access control and/or resource allocation for the non-PDU session. For example, if the value of the first information is "YES", "TRUE", or another value indicating to perform access control and/or resource allocation for the non-PDU session, it can be considered that access control and/or resource allocation for the non-PDU session is required; if the value of the first information is "NO", "FALSE", or another value indicating not to perform access control and/or resource allocation for the non-PDU session, it can be considered that access control and/or resource allocation for the non-PDU session is not required.

The embodiments of the present application do not impose limitations on how the first information indicates whether to permit a terminal device to access the non-PDU session. As a possible implementation, the first information may use one bit to indicate whether to permit a terminal device to access the non-PDU session. For example, a value of "1" for the first information may indicate that the terminal device is permitted to access the non-PDU session, and a value of "0" for the first information may indicate that the terminal device is not permitted to access the non-PDU session. Alternatively, a value of "0" for the first information may indicate that the terminal device is permitted to access the non-PDU session, and a value of "1" for the first information may indicate that the terminal device is not permitted to access the non-PDU session. As another possible implementation, the first information may use multiple bits (two or more) to indicate whether to permit a terminal device to access the non-PDU session. For example, if the value of the first information is "YES", "TRUE", or another value indicating that the terminal device is permitted to access the non-PDU session, it can be considered that the terminal device is permitted to access the non-PDU session; if the value of the first information is "NO", "FALSE", or another value indicating that the terminal device is not permitted to access the non-PDU session, it can be considered that the terminal device is not permitted to access the non-PDU session.

The embodiments of the present application do not impose limitations on how the first information indicates whether to perform access control and/or resource allocation for the non-PDU session and whether to permit a terminal device to access the non-PDU session. As a possible implementation, the first information may use two bits to indicate whether to perform access control and/or resource allocation for the non-PDU session and whether to permit a terminal device to access the non-PDU session. Among the two bits, one bit is used to indicate whether to perform access control and/or resource allocation for the non-PDU session, and the other bit is used to indicate whether to permit a terminal device to access the non-PDU session. Exemplarily, when the value of the first information is "1,1", it may indicate that access control and/or resource allocation for the non-PDU session is required, and that the terminal device is permitted to access the non-PDU session; when the value of the first information is "1,0", it may indicate that access control and/or resource allocation for the non-PDU session is required, and that the terminal device is not permitted to access the non-PDU session; when the value of the first information is "0,0", it may indicate that access control and/or resource allocation for the non-PDU session is not required, and that the terminal device is not permitted to access the non-PDU session. Certainly, the first information may also use more than two bits to indicate whether to perform access control and/or resource allocation for the non-PDU session and whether a terminal device is permitted to access the non-PDU session, e.g., some of these more than two bits are used to indicate whether to perform access control and/or resource allocation for the non-PDU session, and the other part of these bits are used to indicate whether to permit a terminal device to access the non-PDU session.

In some embodiments, the first information may correspond to (or be associated with, related to, etc.) a service. The following provides an example where the first information corresponds to a first service.

In some embodiments, "the first information corresponds to the first service" may be understood as that the first information is used to indicate relevant information of the first service. For example, the first information may be used to indicate a service class and/or service level corresponding to the first service.

The service class corresponding to the first service may also be understood as a service type, a service category, or the like. The service type corresponding to the first service is not limited in the embodiments of the present application, and the first service may be any type of service. For example, the first service may be a stock-taking service or an inventory service. Alternatively, the first service may be a data reporting service, such as a sensor data reporting service. Alternatively, the first service may be a command service, such as a service for controlling device switching.

The way to classify service classes is not limited in the embodiments of the present application. Exemplarily, the service classes may include the service classes listed above, or the service classes may also include other service classes, such as short message service, or video service. Certainly, in addition to the methods listed in the present application, the service classes may also be classified in other ways.

The service level corresponding to the first service may also be understood as a service priority. The service level corresponding to the first service is not limited in the embodiments of the present application. Exemplarily, the first service may be a higher-priority service (e.g., an emergency service, or a data transmission service with a high latency requirement), or the first service may be a lower-priority service (e.g., a data transmission service with a low latency requirement).

The way to classify service levels is not limited in the embodiments of the present application. Exemplarily, the service levels may include high-priority services and low-priority services; alternatively, the service levels may include the highest-priority services, higher-priority services, lower-priority services, and lowest-priority services, etc. Certainly, in addition to the methods listed in the present application, the priority levels may also be classified in other ways. For example, the service levels may include a first level, a second level, and a third level, and the criteria for differentiating these levels can be set arbitrarily according to actual requirements.

In some embodiments, in addition to the service class and/or service level corresponding to the first service, the first information may include other service-related information, which is not limited in the embodiments of the present application. Exemplarily, the first information may further include other information such as a service identifier, and a service latency requirement.

The way to identify the first service is not limited in the embodiments of the present application. Exemplarily, the first service may be identified by one or more of the following: an application ID corresponding to the first service, a data network name (DNN), or single network slice selection assistance information (S-NSSAI).

As mentioned earlier, the granularity of the first message may also be understood as the granularity of the first information and/or second information included in the first message. The granularity of the first information will be introduced below using an example where the granularity of the first message refers to the granularity of the first information.

In some embodiments, the first information may correspond to a terminal device, or in other words, the granularity of the first information may be per UE or per device.

In some embodiments, if the first information corresponds to a terminal device, the first information may be used to indicate whether to permit the terminal device to access the non-PDU session. For example, the first information may be used to indicate whether to permit the terminal device to access a node on the transmission path of the non-PDU session. Alternatively, the first information may be used to indicate whether to permit the terminal device to access the service corresponding to the non-PDU session.

In some embodiments, the first information may correspond to a terminal device group (e.g., a first terminal device group), or in other words, the granularity of the first information may be per UE group or per device group.

In some embodiments, if the first information corresponds to a terminal device group, the first information may be used to indicate terminal device(s) in the terminal device group that are permitted to access the non-PDU session. For example, the first information may be used to indicate terminal device(s) in the terminal device group that are permitted to access a node on the transmission path of the non-PDU session. Alternatively, the first information may be used to indicate terminal device(s) in the terminal device group that are permitted to access the service corresponding to the non-PDU session.

In some embodiments, the use of the first information to indicate terminal device(s) in the terminal device group that are permitted to access the non-PDU session may include one or more of the following: indicating a number of terminal device(s) in the terminal device group that are permitted to access the non-PDU session, and indicating the specific terminal device(s) in the terminal device group that are permitted to access the non-PDU session.

As an implementation, the first information may carry terminal device ID(s) to indicate the specific terminal device(s) permitted to access the non-PDU session.

In some embodiments, the first information may correspond to a service (e.g., the first service), or in other words, the granularity of the first information may be per service.

In some embodiments, if the first information corresponds to a service, the first information may be used to indicate the terminal device(s) or terminal device group permitted to access the non-PDU session for the service. For example, the first information may be used to indicate the terminal device(s) or terminal device group permitted to access a node on the transmission path of the non-PDU session for the service. Alternatively, the first information may be used to indicate the terminal device(s) or terminal device group permitted to access the service.

The embodiments of the present application do not impose limitations on how the first information indicates the terminal device group permitted to access the service. As an implementation, the first information may carry an identifier (group ID) of a terminal device group to indicate the terminal device group permitted to access the service. As another implementation, the first information may carry identifiers of a plurality of terminal devices (e.g., a plurality of UE IDs) to indicate the terminal device group permitted to access the service.

In the embodiment of the present application, the indication of different pieces of first information corresponding to different terminal devices, terminal device groups, or services may facilitate differentiated control for different terminal devices or different terminal device groups or different services.

The second information will be introduced below.

In some embodiments, the second information may be used to indicate a radio connection establishment cause (e.g., a cause for establishing an RRC connection) corresponding to the first information.

In some embodiments, the second information may include a correspondence between the first information and the radio connection establishment cause. In other words, the second information may include a setting relationship of the radio connection establishment cause corresponding to the first information.

In some embodiments, the second information may include a radio connection establishment cause corresponding to the first information.

In some embodiments, when the first information differs, the radio connection establishment cause corresponding to the first information differs. In other words, there may be multiple correspondences between multiple pieces of first information and radio connection establishment causes. In an example where the first information is used to indicate the service class or service level of the first service, when the service class or service level indicated by the first information differs, the radio connection establishment cause corresponding to the first information may also differs. Exemplarily, when the service class indicated by the first information is a inventory service, the radio connection establishment cause corresponding to the first information may be Cause A; when the service class indicated by the first information is a sensor data reporting service, the radio connection establishment cause corresponding to the first information may be Cause B; when the service class indicated by the first information is a command service, the radio connection establishment cause corresponding to the first information may be Cause C; when the service class indicated by the first information is a short message service, the radio connection establishment cause corresponding to the first information may be Cause D.

In some embodiments, "the second information includes the correspondence between the first information and the radio connection establishment cause" may be understood as that the second information includes one or more of the following: the correspondence between the inventory service and Cause A; the correspondence between the sensor data reporting service and Cause B; the correspondence between the command service and Cause C; and the correspondence between the short message service and Cause D.

In some embodiments, "the second information includes the radio connection establishment cause corresponding to the first information" may be understood as that the second information includes one or more of the following: Cause A, Cause B, Cause C, or Cause D.

In some embodiments, the first message may include the first information. For example, in a case where the first message is used for establishing a data transmission channel corresponding to the non-PDU session, the first message may include the first information. Alternatively, in a case where the first message is a message used to indicate a registration result of a terminal device (e.g., a registration accept message), the first message may include the first information. Alternatively, in a case where the first message is a radio connection establishment request message (e.g., an RRC connection establishment request message), the first message may include the first information.

In some embodiments, the first message may include the second information. For example, in a case where the first message is a message used to indicate a registration result of a terminal device (e.g., a registration accept message), the first message may include the second information. Alternatively, in a case where the first message is a radio connection establishment request message (e.g., an RRC connection establishment request message), the first message may include the second information.

In some embodiments, the first message may include both the first information and the second information. For example, in a case where the first message is a message used to indicate a registration result of a terminal device (e.g., a registration accept message), the first message may include both the first information and the second information. Alternatively, in a case where the first message is a radio connection establishment request message (e.g., an RRC connection establishment request message), the first message may include both the first information and the second information.

In some embodiments, in addition to the first information and/or the second information, the first message may further include other information, which is not limited in the embodiments of the present application. Exemplarily, the first message may further include identification information of the terminal device, identification information of the terminal device group, and identification information of the first service.

It should be noted that, in some embodiments, if the first message includes one of the first information and the second information, the first message is considered equivalent or identical to the information it includes. In other words, in such a case, the first message may be replaced by the information it includes. In an example where the first message includes the first information but not the second information, the first message may be considered equivalent to the first information. In this case, the act of transmitting, by the first communication device, the first message to the second communication device may be replaced by: transmitting, by the first communication device, the first information to the second communication device. In an example where the first message includes the second information but not the first information, the first message may be considered equivalent to the second information. In this case, the act of transmitting, byy the first communication device, the first message to the second communication device may be replaced by: transmitting, by the first communication device, the second information to the second communication device.

In this way, when data is transmitted in the non-PDU session manner, differentiated control on data transmission may be implemented based on the first information and/or the second information in the embodiments of the present application.

In some embodiments, the core network (e.g., a network element of the core network) may perform access control or resource allocation on the resources for data transmission corresponding to the non-PDU session based on the first information and/or the second information.

In some embodiments, when multiple services conflict at the terminal device side, the terminal device may process the services according to the first information and/or the second information, for example, discard the services. As an implementation, the terminal device may discard services based on service classes. For example, when multiple services conflict, the terminal device may discard the sensor data reporting service. As another implementation, the terminal device may discard services based on service levels. For example, when multiple services conflict, the terminal device may discard services with low-priority service level.

In some embodiments, the access network device may perform access control or resource allocation on the resources for data transmission corresponding to the non-PDU session according to the first information and/or the second information.

As mentioned earlier, the transmitting terminal and receiving terminal of the first message may vary depending on the scenario. To facilitate understanding, several specific embodiments will be provided below. It should be noted that the embodiments described below are intended only to exemplify the transmitting and receiving terminals of the first message, as well as the possible procedures implementation of the embodiments of the present application in different scenarios, and should not be construed as limitations on the embodiments of the present application. In other words, the embodiments of the present application may also be applied to other scenarios where differentiated control of non-PDU session data transmission can be achieved via the first message.

It should be noted that some or all of the steps in the embodiments described below may be performed, which is not limited in the embodiments of the present application. For example, all of the steps S410 to S450 in Embodiment 1 are performed; alternatively, only steps S420 and S430 in Embodiment 1 are performed. In another example, all of the steps S610 to S650 in Embodiment 3 are performed; alternatively, only steps S610 to S630 in Embodiment 3 are performed.

It should also be noted that the embodiments described below may be performed individually or in combination, which is not limited in the embodiments of the present application. For example, Embodiment 1 may be performed individually or in combination with Embodiment 3. In another example, the Embodiment 2 may be performed individually or in combination with the Embodiment 3.

### Embodiment 1: the core network controls the non-PDU session

In Embodiment 1, the first communication device and the second communication device are both network elements in the core network. For example, the first communication device is an AMF, and the second communication device is an NEF or an AIoT NF.

In Embodiment 1, the first message is used for establishing a data transmission channel corresponding to the non-PDU session.

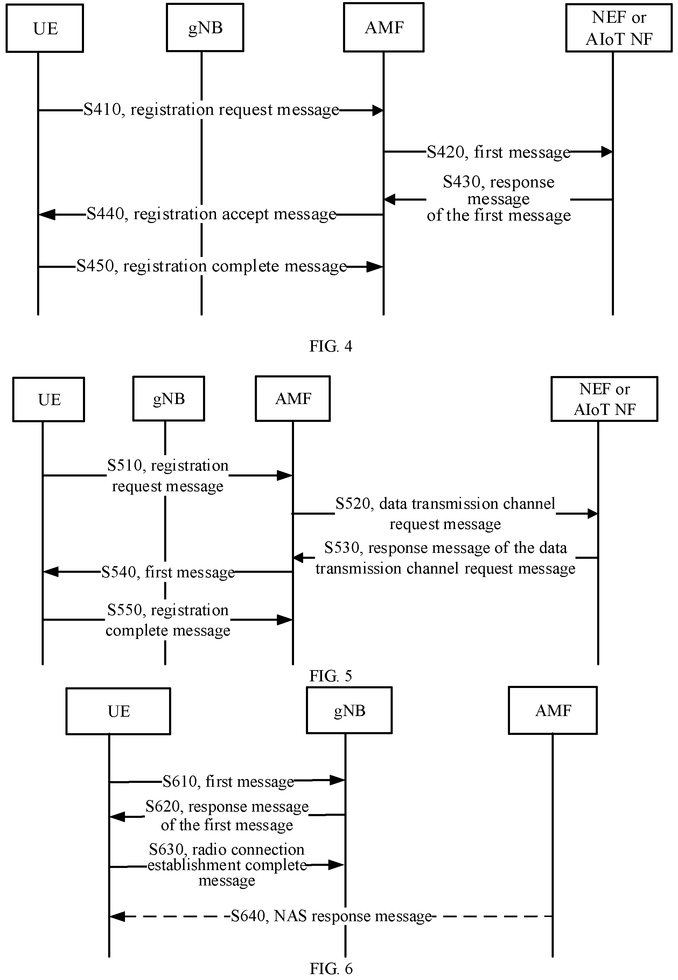

FIG. 4 is a schematic flowchart of a wireless communication method provided by another embodiment of the present application. The method shown in FIG. 4 is introduced from the perspective of the interaction between multiple devices or network elements or nodes. The method shown in FIG. 4 may include steps S410 to S450, which will be described below.

In step S410, a terminal device transmits a registration request message to the first communication device.

In some embodiments, the registration request message may carry identification information of the terminal device, e.g., a terminal device ID.

In some embodiments, the registration request message may carry relevant information of the service request (e.g., request information for the first service). The relevant information of the service request carried in the registration request message is not limited in the embodiments of the present application. For example, the relevant information of the service request may be identified using one or more of the following identifiers: an application ID, a DNN, or an S-NSSAI.

The service (e.g., the first service) carried in the registration request message is not limited in the embodiments of the present application. For example, the service may belong to one or more of the following service types: an inventory service, a sensor data reporting service, or a command service.

In some embodiments, the service carried in the registration request message may be a service that the terminal device requests to use, or in other words, the service may be a service intended for the terminal device.

In some embodiments, the service carried in the registration request message may be a service that the terminal device group requests to use, or in other words, the service may be a service intended for the terminal device group.

In step S420, the first communication device transmits a first message to the second communication device. The first message is used for establishing a data transmission channel corresponding to the non-PDU session. In other words, the first message is a data transmission channel establishment request message to establish the data transmission channel corresponding to the non-PDU session.

In some embodiments, the granularity of the first message may be per UE (or per device), per UE group (or per device group), or per service. In some embodiments, considering that different first messages may have different granularities, the first message may carry identification information representing the granularity of the first message. For example, the first message may carry a UE ID, a device ID, a group ID, or service information (e.g., an application ID, a DNN, or an S-NSSAI). As an example, the first message may carry a UE ID or a device ID to indicate that the granularity of the first message is per UE or per device. As another example, the first message may carry a group ID to indicate that the granularity of the first message is a UE group or a device group. As another example, the first message may carry service information to indicate that the granularity of the first message is per service.

In some embodiments, the first message carries the first information. For example, the first message carries information about the service class and/or service level, e.g., the service class and/or service level corresponding to the first service.

In some embodiments, before the first communication device transmits the first message to the second communication device, the first communication device may first obtain the first information corresponding to the service (e.g., the first service) that is carried in the registration request message.

As an implementation, the first communication device may obtain the first information corresponding to the first service from the UDM. For example, the first communication device may obtain from the UDM the first information corresponding to a service requested by a terminal device or a terminal device group.

As another implementation, the first communication device may obtain the first information corresponding to the first service from a database of a service provider (e.g., a third-party server or a third-party application). For example, the first communication device may obtain from the UDM the first information corresponding to a service requested by a terminal device or a terminal device group.

In step S430, the second communication device transmits a response message of the first message to the first communication device. For example, the second communication device transmits a response message to the data transmission channel request message to the first communication device. In some embodiments, the response message may be used to indicate that the establishment of the data transmission channel corresponding to the non-PDU session is complete.

In some embodiments, the second communication device may perform access control or resource allocation according to the first information.

There are multiple possible implementations for the second communication device to perform access control or resource allocation according to the first information. As a possible implementation, in a case where the first information corresponds to a terminal device, performing, by the second communication device, access control or resource allocation according to the first information may include: determining, for the terminal device, whether to permit the terminal device to access the non-PDU session (e.g., access the second communication device). As another possible implementation, in a case where the first information corresponds to a terminal device group, performing, by the second communication device, access control or resource allocation according to the first information may include: determining, for the terminal device group, the terminal device(s) in the terminal device group that are permitted to access the non-PDU session (e.g., access to the second communication device), for example, determining the number of terminal device(s) in the terminal device group that are permitted to access the non-PDU session and/or the specific terminal device(s) in the terminal device group that are permitted to access the non-PDU session. As another possible implementation, in a case where the first information corresponds to a service, performing, by the second communication device, access control or resource allocation according to the first information may include: determining, for the service, the terminal device(s) or terminal device group permitted to access the non-PDU session (e.g., access to the second communication device).

In step S440, the first communication device returns a registration accept message to the terminal device.

In step S450, the terminal device returns a registration complete message to the first communication device.

### Embodiment 2: the terminal device controls the non-PDU session

In Embodiment 2, the first communication device is a network element in the core network, and the second communication device is a terminal device. For example, the first communication device is an AMF, and the second communication device is a terminal device.

In Embodiment 2, the first message is a registration accept message.

FIG. 5 is a schematic flowchart of a wireless communication method provided by yet another embodiment of the present application. The method shown in FIG. 5 is introduced from the perspective of the interaction between multiple devices or network elements or nodes. The method shown in FIG. 5 may include steps S510 to S550, which will be described below.

In step S510, the second communication device transmits a registration request message to the first communication device.

In some embodiments, the registration request message may carry identification information of the terminal device, e.g., a terminal device ID.

In some embodiments, the registration request message may carry relevant information of the service request (e.g., request information for the first service). The relevant information of the service request carried in the registration request message is not limited in the embodiments of the present application. For example, the relevant information of the service request may be identified using one or more of the following identifiers: an application ID, a DNN, or an S-NSSAI.

The service (e.g., the first service) carried in the registration request message is not limited in the embodiments of the present application. For example, the service may belong to one or more of the following service types: an inventory service, a sensor data reporting service, or a command service.

In some embodiments, the service carried in the registration request message may be a service that the terminal device requests to use, or in other words, the service may be a service intended for the terminal device.

In some embodiments, the service carried in the registration request message may be a service that the terminal device group requests to use, or in other words, the service may be a service intended for the terminal device group.

In step S520, the first communication device transmits a data transmission channel establishment request message to the NEF or AIoT NF.

In some embodiments, the granularity of the data transmission channel establishment request message may be per UE (or per device), per UE group (or per device group), or per service. In some embodiments, considering that different data transmission channel establishment request messages may have different granularities, the data transmission channel establishment request message may carry identification information representing the granularity of the data transmission channel establishment request message. For example, the data transmission channel establishment request message may carry a UE ID, a device ID, a group ID, or service information (e.g., an application ID, a DNN, or an S-NSSAI). As an example, the data transmission channel establishment request message may carry a UE ID or a device ID to indicate that the granularity of the data transmission channel establishment request message is per UE or per device. As another example, the data transmission channel establishment request message may carry a group ID to indicate that the granularity of the data transmission channel establishment request message is a UE group or a device group. As another example, the data transmission channel establishment request message may carry service information to indicate that the granularity of the data transmission channel establishment request message is per service.

In some embodiments, the data transmission channel establishment request message carries the first information. For example, the data transmission channel establishment request message carries information about the service class and/or service level, such as the service class and/or service level corresponding to the first service.

In some embodiments, before the first communication device transmits the data transmission channel establishment request message to the NEF or AIoT NF, the first communication device may first obtain the first information corresponding to the service (e.g., the first service) that is carried in the registration request message.

As an implementation, the first communication device may obtain the first information corresponding to the first service from the UDM. For example, the first communication device may obtain from the UDM the first information corresponding to a service requested by a terminal device or a terminal device group.

As another implementation, the first communication device may obtain the first information corresponding to the first service from a database of a service provider (e.g., a third-party server or a third-party application). For example, the first communication device may obtain from the UDM the first information corresponding to a service requested by a terminal device or a terminal device group.

**In** step S530, the NEF or AIoT NF transmits a response message of the data transmission channel request message to the first communication device. In some embodiments, the response message may be used to indicate that the establishment of the data transmission channel corresponding to the non-PDU session is complete.

In some embodiments, the NEF or AIoT NF may perform access control or resource allocation according to the first information.

There are multiple possible implementations for the NEF or AIoT NF to perform access control or resource allocation according to the first information. As a possible implementation, in a case where the first information corresponds to a terminal device, performing, by the NEF or AIoT NF, access control or resource allocation according to the first information may include: determining, for the terminal device, whether to permit the terminal device to access the non-PDU session (e.g., access the NEF or AIoT NF). As another possible implementation, in a case where the first information corresponds to a terminal device group, performing, by the NEF or AIoT NF, access control or resource allocation according to the first information may include: determining, for the terminal device group, terminal device(s) in the terminal device group that are permitted to access the non-PDU session (e.g., access to NEF or AIoT NF), for example, determining the number of terminal device(s) in the terminal device group that are permitted to access the non-PDU session and/or the specific terminal device(s) in the terminal device group that are permitted to access the non-PDU session. As another possible implementation, in a case where the first information corresponds to a service, performing, by the NEF or AIoT NF, access control or resource allocation according to the first information may include: determining, for the service, the terminal device(s) or terminal device group permitted to access the non-PDU session (e.g., access to the NEF or AIoT NF).

In step S540, the first communication device transmits the first message to the second communication device. The first message is a registration accept message.

In some embodiments, the first message may carry the first information and/or the second information. For example, the first message carries information about the service class and/or service level; alternatively, the first message carries information about the correspondence between the service class and/or service level and the radio connection establishment cause; alternatively, the first message carries the information about the service class and/or service level, as well as the information about the correspondence between the service class and/or service level and the radio connection establishment cause.

In some embodiments, when multiple services conflict at the terminal device side, the terminal device may process the services according to the first information and/or the second information, for example, discard the services. As an implementation, the terminal device may discard services based on service classes. For example, when multiple services conflict, the terminal device may discard the sensor data reporting service. As another implementation, the terminal device may discard services based on service levels. For example, when multiple services conflict, the terminal device may discard services with low-priority service level.

In some embodiments, the second information may be used when the terminal device needs to establish a radio connection.

In step S550, the second communication device returns a registration complete message to the first communication device.

### Embodiment 3: the access network device controls the non-PDU session

In Embodiment 3, the first communication device is a terminal device, and the second communication device is an access network device.

In Embodiment 3, the first message is a radio connection establishment request message, e.g., an RRC connection establishment request message.

FIG. 6 is a schematic flowchart of a wireless communication method provided by yet another embodiment of the present application. The method shown in FIG. 6 is introduced from the perspective of the interaction between multiple devices or network elements or nodes. The method shown in FIG. 6 may include steps S610 to S640, which will be described below.

In step S610, the first communication device transmits a first message to the second communication device, where the first message is a radio connection establishment request message.

In some embodiments, the radio connection may be an RRC connection. In some embodiments, the radio connection may also be other types of radio connections.

In some embodiments, the first message may carry the first information. For example, the first message carries information about the service class and/or service level.

In some embodiments, the first information carried in the first message may be obtained by the first communication device from a registration accept message.

In some embodiments, the first message may carry the second information. For example, the first message may carry a radio connection establishment cause corresponding to the first information.

In some embodiments, the first message may carry both the first information and the second information. For example, the first message carries information about the service class and/or service level, as well as a radio connection establishment cause corresponding to the first information.

In some embodiments, whether the first message carries the second information depends on whether the registration accept message received by the terminal device carries the second information. For example, if the registration accept message carries the second information, the first message may carry the second information. Alternatively, if the registration accept message does not carry the second information, the first message may not carry the second information. However, the embodiments of the present application are not limited thereto. For example, even if the registration accept message carries the second information, the first message may not carry the second information.

In some embodiments, the second information carried in the registration accept message and the second information carried in the first message may be different. For example, the second information carried in the registration accept message is used to indicate the correspondence between the first information and the radio connection establishment cause, and the second information carried in the first message is used to indicate the radio connection establishment cause corresponding to the first information. In other words, in some embodiments, if the registration accept message carries information indicating the radio connection establishment cause corresponding to the first information, then when initiating a radio connection, the terminal device may set or configure the radio connection establishment cause according to a currently triggered service (i.e., according to the first information).

In step S620, the second communication device transmits a response message of the first message to the first communication device. For example, the second communication device transmits a response message of the radio connection establishment request to the first communication device.

In some embodiments, the second communication device may perform access control or resource allocation according to the first information and/or the second information.

There are multiple possible implementations for the second communication device to perform access control or resource allocation according to the first information and/or the second information. As a possible implementation, in a case where the first information corresponds to a terminal device, performing, by the second communication device, access control or resource allocation according to the first information and/or the second information may include: determining, for the terminal device, whether to permit the terminal device to access the non-PDU session (e.g., access a service corresponding to the non-PDU session). As another possible implementation, in a case where the first information corresponds to a terminal device group, performing, by the second communication device, access control or resource allocation according to the first information and/or the second information may include: determining, for the terminal device group, terminal device(s) in the terminal device group that are permitted to access the non-PDU session (e.g., access to the service corresponding to the non-PDU session), for example, determining the number of terminal device(s) in the terminal device group that are permitted to access the non-PDU session and/or the specific terminal device(s) in the terminal device group permitted to access the non-PDU session. As another possible implementation, in a case where the first information corresponds to a service, performing, by the second communication device, access control or resource allocation according to the first information and/or the second information may include: determining, for the service, the terminal device(s) or terminal device group permitted to access the non-PDU session (e.g., access to the service corresponding to the non-PDU session).

In step S630, the first communication device transmits a radio connection establishment complete message to the second communication device.

In some embodiments, the radio connection establishment complete message may carry data reported via the NAS. Alternatively, in other words, the radio connection establishment complete message may carry a NAS reporting message.

In some embodiments, the NAS reporting message may be a registration request message, for example, a registration request message for the first communication device to re-initiate a registration request.

In some embodiments, the NAS reporting message may be another NAS message other than the registration request message.

In step S640, if the radio connection establishment complete message carries a NAS reporting message, the AMF returns a NAS response message to the first communication device.

In an example where the above-mentioned NAS reporting message is a registration request message, the NAS response message may be a registration accept message. In an example where the above-mentioned NAS reporting message is another NAS message, the NAS response message may be another NAS acknowledgment message.

In some embodiments, if the above-mentioned NAS reporting message is a registration request message, after step S640, the first communication device may also return a registration complete message to the AMF.

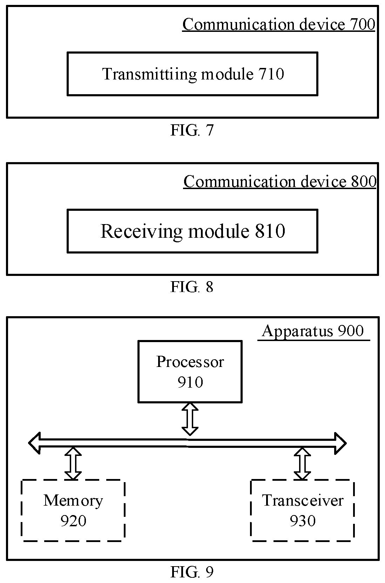

The method embodiments of the present application have been described in detail above with reference to FIG. 1 to FIG. 6, and apparatus embodiments of the present application will be described in detail below with reference to FIG. 7 to FIG. 9. It should be understood that the description of the method embodiment corresponds to the description of the apparatus embodiment, and therefore, for parts that are not described below in detail, reference may be made to the previous method embodiment.

FIG. 7 is a schematic block diagram of a communication device provided by an embodiment of the present application. The communication device 700 shown in FIG. 7 may be, for example, any first communication device mentioned above. The communication device 700 may include a transmitting module 710.

The transmitting module 710 may be configured to transmit a first message to a second communication device. The first message includes one or more of the following information: first information used for resource control of a non-PDU session; or second information used to indicate a radio connection establishment cause corresponding to the first information.

Optionally, the first information corresponds to a first service.

Optionally, the first information is used to indicate a service class or service level corresponding to the first service.

Optionally, the first information is used for access control and/or resource allocation of the non-PDU session.

Optionally, the first information corresponds to a terminal device, and the first information is used to indicate whether to permit the terminal device to access the non-PDU session.

Optionally, the first information corresponds to a first terminal device group, and the first information is used to indicate terminal device(s) in the first terminal device group that are permitted to access the non-PDU session.

Optionally, the first information corresponds to a first service, and the first information is used to indicate a terminal device or terminal device group permitted to access the non-PDU session for the first service.

Optionally, the first communication device and the second communication device are both network elements in a core network.

Optionally, the first message is used for establishing a data transmission channel corresponding to the non-PDU session.

Optionally, the data transmission channel includes one or more of: a data transmission channel for a terminal device; a data transmission channel for a first terminal device group; or a data transmission channel for the first service.

Optionally, the first communication device is a network element in a core network, and the second communication device is a terminal device.

Optionally, the first message is a registration accept message.

Optionally, the second information includes a correspondence between the first information and the radio connection establishment cause.

Optionally, the first communication device is a terminal device, and the second communication device is an access network device.

Optionally, the first message is a radio connection establishment request message.

Optionally, the second information includes a radio connection establishment cause corresponding to the first information.

Optionally, the transmitting module 710 may be a transceiver 930. The communication device 700 may further include a processor 910 and a memory 920, as specifically shown in FIG. 9.

FIG. 8 is a schematic block diagram of a communication device provided by another embodiment of the present application. The communication device 800 shown in FIG. 8 may be, for example, any second communication device mentioned above. The communication device 800 may include a receiving module 810.

The receiving module 810 may be configured to receive a first message transmitted by a first communication device. The first message includes one or more of the following information: first information used for resource control of a non-PDU session; or second information used to indicate a radio connection establishment cause corresponding to the first information.

Optionally, the first information corresponds to a first service.

Optionally, the first information is used to indicate a service class or service level corresponding to the first service.

Optionally, the first information is used for access control and/or resource allocation of the non-PDU session.

Optionally, the first information corresponds to a terminal device, and the first information is used to indicate whether to permit the terminal device to access the non-PDU session.

Optionally, the first information corresponds to a first terminal device group, and the first information is used to indicate terminal device(s) in the first terminal device group that are permitted to access the non-PDU session.

Optionally, the first information corresponds to a first service, and the first information is used to indicate a terminal device or terminal device group permitted to access the non-PDU session for the first service.

Optionally, the first communication device and the second communication device are both network elements in a core network.

Optionally, the first message is used for establishing a data transmission channel corresponding to the non-PDU session.

Optionally, the data transmission channel includes one or more of: a data transmission channel for a terminal device; a data transmission channel for a first terminal device group; or a data transmission channel for the first service.

Optionally, the first communication device is a network element in the core network, and the second communication device is a terminal device.

Optionally, the first message is a registration accept message.

Optionally, the second information includes a correspondence between the first information and the radio connection establishment cause.

Optionally, the first communication device is a terminal device, and the second communication device is an access network device.

Optionally, the first message is a radio connection establishment request message.

Optionally, the second information includes the radio connection establishment cause corresponding to the first information.

Optionally, the receiving module 810 may be a transceiver 930. The communication device 800 may further include a processor 910 and a memory 920, as specifically shown in FIG. 9.

FIG. 9 is a schematic block diagram of a communication apparatus according to the embodiments of the present application. The dashed lines in FIG. 9 indicate that the unit or module is optional. The apparatus 900 may be used to implement the methods described in the above method embodiment. The apparatus 900 may be a chip, a terminal device, or a network device.

The apparatus 900 may include one or more processors 910. The processor 910 can support the apparatus 900 to implement the methods described in the above method embodiment. The processor 910 may be a general-purpose processor or a special-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gate or transistor logic devices, discrete hardware components. A general purpose processor may be a microprocessor, or the processor may be any conventional processor or the like.

The apparatus 900 may further include one or more memories 920. The memory 920 has a program stored thereon, which can be executed by the processor 910 to cause the processor 910 to perform the methods described in the above method embodiments. The memory 920 may be independent of the processor 910 or may be integrated into the processor 910.

The apparatus 900 may further include a transceiver 930. The processor 910 may communicate with other devices or chips through the transceiver 930. For example, the processor 910 may transmit and receive data with other devices or chips through the transceiver 930.

A computer-readable storage medium for storing a program is further provided by the embodiment of the present application. The computer-readable storage medium may be applied to the terminal or network device provided by the embodiments of the present application, and the program causes the computer to perform the methods performed by the terminal or network device in various embodiments of the present application.

A computer program product is further provided by the embodiment of the present application. The computer program product includes a program. The computer program product may be applied to the terminal or network device provided by the embodiments of the present application, and the program causes the computer to perform the methods performed by the terminal or network device in various embodiments of the present application.

A computer program is further provided by the embodiment of the present application. The computer program may be applied to the terminal or network device provided by the embodiments of the present application, and the computer program causes the computer to perform the methods performed by the terminal or network device in various embodiments of the present application.

It should be understood that the terms "system" and "network" may be used interchangeably in the present application. In addition, the terms used in the present application are only used to explain the specific embodiments of the present application and are not intended to limit the present application. The terms "first", "second", "third" and "fourth" in the specification, claims and drawings of the present application are used to distinguish different objects rather than to describe a specific order. In addition, the terms "include" and "has" and any variations thereof, are intended to cover a non-exclusive inclusion.

In the embodiments of the present application, the "indication" mentioned may mean a direct indication, or an indirect indication, or may represent an indication of an association. For example, A indicates B, which may mean that A directly indicates B (for example, B may be obtained by A) or may mean that A indirectly indicates B (for example, A indicates C, and B may be obtained by C), or may mean that there is an association between A and B.

In the embodiments of the present application, "B corresponding to A" means that B is associated with A, and B may be determined according to A. However, it should also be understood that determining B according to A does not mean determining B only according to A, B may also be determined according to A and/or other information.

In the embodiments of the present application, the term "corresponding" may mean that there is a direct correspondence or indirect correspondence between two, or there is an association between the two, or there is may mean a relationship of indicating and being indicated or a relationship of configuring and being configured, etc.

In the embodiments of the present application, the word "include" mentioned may refer to direct include or indirect include. Optionally, "include" mentioned in the embodiments of the present application may be replaced with "indicate" or "used to determine". For example, A includes B may be replaced by A indicates B, or A is used to determine B.

In the embodiments of the present application, "predefine" or "pre-configured" may be achieved by pre-saving corresponding codes, tables or other methods that may be used to indicate relevant information in a device (for example, including a terminal device and a network device), the specific implementation is not limited in the present application. For example, predefined may refer to that defined in the protocol.

In the embodiments of the present application, the "protocol" may refer to a standard protocol in the communications field, for example, it may include an LTE protocol, an NR protocol, and related protocols used in future communication systems, which is not limited in the present application.

In the embodiments of the present application, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

In various embodiments of the present application, the size of the serial numbers of the above-mentioned processes does not mean the order of performing. The performing order of each process should be determined by its function and internal logic, and should not constitute any limitation on the implementation process of the embodiments of the present application.

In the several embodiments provided by the present application, it should be understood that the disclosed systems, apparatus, and methods may be implemented in other ways. For example, the apparatus embodiments described above are merely illustrative. For example, the division of the units is merely a logical function division. In actual implementation, there may be other division methods, such as multiple units or components may be combined or integrated into another system, or some features may be ignored or not performed. On the other hand, the mutual coupling or direct coupling or communication connection shown or discussed may be an indirect coupling or communication connection through some interface, device or unit, which may be electrical, mechanical or other forms.

The units described as separate components may or may not be physically separated, and the components shown as units may or may not be physical units, that is, they may be located in one place or distributed over multiple network units. Some or all of the units may be selected according to actual needs to achieve the purpose of the solution in the present embodiment.

In addition, each functional unit in each embodiment of the present application may be integrated into one processing unit, or each unit may exist physically separately, or two or more units may be integrated into one unit.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instruction(s) are loaded on and executed by a computer, processes or functions in accordance with the embodiments of the present application are generated in whole or in part. The computer may be a general-purpose computer, a dedicated computer, a computer network, or any other programmable device. The computer instruction(s) may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium able to be read by the computer, or may be a data storage device, such as a server or data center, integrated by one or more available media. The available medium may be a magnetic medium (e.g., a floppy disk, a hard disk or a magnetic tape), an optical medium (e.g., a digital versatile disc (DVD)), a semiconductor medium (e.g., a solid state drive (SSD)), or the like.

The above is only a specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A wireless communication method, comprising:
transmitting, by a first communication device, a first message to a second communication device, wherein the first message comprises one or more of the following information:
first information, used for resource control of a non-PDU session; or
second information, used to indicate a radio connection establishment cause corresponding to the first information.

2. The method according to claim 1, wherein the first information corresponds to a first service.

3. The method according to claim 2, wherein the first information is used to indicate a service class or service level corresponding to the first service.

4. The method according to any one of claims 1 to 3, wherein the first information is used for access control and/or resource allocation of the non-PDU session.

5. The method according to any one of claims 1 to 4, wherein the first information corresponds to a terminal device, and the first information is used to indicate whether to permit the terminal device to access the non-PDU session.

6. The method according to any one of claims 1 to 4, wherein the first information corresponds to a first terminal device group, and the first information is used to indicate terminal device(s) in the first terminal device group that are permitted to access the non-PDU session.

7. The method according to any one of claims 1 to 4, wherein the first information corresponds to a first service, and the first information is used to indicate a terminal device or terminal device group permitted to access the non-PDU session for the first service.

8. The method according to any one of claims 1 to 7, wherein the first communication device and the second communication device are both network elements in a core network.

9. The method according to claim 8, wherein the first message is used for establishing a data transmission channel corresponding to the non-PDU session.

10. The method according to claim 9, wherein the data transmission channel comprises one or more of:
a data transmission channel for a terminal device;
a data transmission channel for a first terminal device group; or
a data transmission channel for a first service.

11. The method according to any one of claims 1 to 7, wherein the first communication device is a network element in a core network, and the second communication device is a terminal device.

12. The method according to claim 11, wherein the first message is a registration accept message.

13. The method according to claim 11 or 12, wherein the second information comprises a correspondence between the first information and the radio connection establishment cause.

14. The method according to any one of claims 1 to 7, wherein the first communication device is a terminal device, and the second communication device is an access network device.

15. The method according to claim 14, wherein the first message is a radio connection establishment request message.

16. The method according to claim 14 or 15, wherein the second information comprises the radio connection establishment cause corresponding to the first information.

17. A wireless communication method, comprising:
receiving, by a second communication device, a first message transmitted by a first communication device, wherein the first message comprises one or more of the following information:
first information, used for resource control of a non-PDU session; or
second information, used to indicate a radio connection establishment cause corresponding to the first information.

18. The method according to claim 17, wherein the first information corresponds to a first service.

19. The method according to claim 18, wherein the first information is used to indicate a service class or service level corresponding to the first service.

20. The method according to any one of claims 17 to 19, wherein the first information is used for access control and/or resource allocation of the non-PDU session.

21. The method according to any one of claims 17 to 20, wherein the first information corresponds to a terminal device, and the first information is used to indicate whether to permit the terminal device to access the non-PDU session.

22. The method according to any one of claims 17 to 20, wherein the first information corresponds to a first terminal device group, and the first information is used to indicate terminal device(s) in the first terminal device group that are permitted to access the non-PDU session.

23. The method according to any one of claims 17 to 20, wherein the first information corresponds to a first service, and the first information is used to indicate a terminal device or terminal device group permitted to access the non-PDU session for the first service.

24. The method according to any one of claims 17 to 23, wherein the first communication device and the second communication device are both network elements in a core network.

25. The method according to claim 24, wherein the first message is used for establishing a data transmission channel corresponding to the non-PDU session.

26. The method according to claim 25, wherein the data transmission channel comprises one or more of:
a data transmission channel for a terminal device;
a data transmission channel for a first terminal device group; or
a data transmission channel for a the first service.

27. The method according to any one of claims 17 to 23, wherein the first communication device is a network element in a core network, and the second communication device is the terminal device.

28. The method according to claim 27, wherein the first message is a registration accept message.

29. The method according to claim 27 or 28, wherein the second information comprises a correspondence between the first information and the radio connection establishment cause.

30. The method according to any one of claims 17 to 23, wherein the first communication device is a terminal device, and the second communication device is an access network device.

31. The method according to claim 30, wherein the first message is a radio connection establishment request message.

32. The method according to claim 30 or 31, wherein the second information comprises the radio connection establishment cause corresponding to the first information.

33. A communication device, wherein the communication device is a first communication device, and the communication device comprises:
a transmitting module, configured to transmit a first message to a second communication device, wherein the first message comprises one or more of the following information:
first information, used for resource control of a non-PDU session; or
second information, used to indicate a radio connection establishment cause corresponding to the first information.

34. The communication device according to claim 33, wherein the first information corresponds to a first service.

35. The communication device according to claim 34, wherein the first information is used to indicate a service class or service level corresponding to the first service.

36. The communication device according to any one of claims 33 to 35, wherein the first information is used for access control and/or resource allocation of the non-PDU session.

37. The communication device according to any one of claims 33 to 36, wherein the first information corresponds to a terminal device, and the first information is used to indicate whether to permit the terminal device to access the non-PDU session.

38. The communication device according to any one of claims 33 to 36, wherein the first information corresponds to a first terminal device group, and the first information is used to indicate terminal device(s) in the first terminal device group that are permitted to access the non-PDU session.

39. The communication device according to any one of claims 33 to 36, wherein the first information corresponds to a first service, and the first information is used to indicate a terminal device or terminal device group permitted to access the non-PDU session for the first service.

40. The communication device according to any one of claims 33 to 39, wherein the first communication device and the second communication device are both network elements in a core network.

41. The communication device according to claim 40, wherein the first message is used for establishing a data transmission channel corresponding to the non-PDU session.

42. The communication device according to claim 41, wherein the data transmission channel comprises one or more of:
a data transmission channel for a terminal device;
a data transmission channel for a first terminal device group; or
a data transmission channel for a first service.

43. The communication device according to any one of claims 33 to 39, wherein the first communication device is a network element in a core network, and the second communication device is a terminal device.

44. The communication device according to claim 43, wherein the first message is a registration accept message.

45. The communication device according to claim 43 or 44, wherein the second information comprises a correspondence between the first information and the radio connection establishment cause.

46. The communication device according to any one of claims 33 to 39, wherein the first communication device is a terminal device, and the second communication device is an access network device.

47. The communication device according to claim 46, wherein the first message is a radio connection establishment request message.

48. The communication device according to claim 46 or 47, wherein the second information comprises the radio connection establishment cause corresponding to the first information.

49. A communication device, wherein the communication device is a second communication device, and the communication device comprises:
a receiving module, configured to receive a first message transmitted by a first communication device, wherein the first message comprises one or more of the following information:
first information, used for resource control of a non-PDU session; or
second information, used to indicate a radio connection establishment cause corresponding to the first information.

50. The communication device according to claim 49, wherein the first information corresponds to a first service.

51. The communication device according to claim 50, wherein the first information is used to indicate a service class or service level corresponding to the first service.

52. The communication device according to any one of claims 49 to 51, wherein the first information is used for access control and/or resource allocation of the non-PDU session.

53. The communication device according to any one of claims 49 to 52, wherein the first information corresponds to a terminal device, and the first information is used to indicate whether to permit the terminal device to access the non-PDU session.

54. The communication device according to any one of claims 49 to 52, wherein the first information corresponds to a first terminal device group, and the first information is used to indicate terminal device(s) in the first terminal device group that are permitted to access the non-PDU session.

55. The communication device according to any one of claims 49 to 52, wherein the first information corresponds to a first service, and the first information is used to indicate a terminal device or terminal device group permitted to access the non-PDU session for the first service.

56. The communication device according to any one of claims 49 to 55, wherein the first communication device and the second communication device are both network elements in a core network.

57. The communication device according to claim 56, wherein the first message is used for establishing a data transmission channel corresponding to the non-PDU session.

58. The communication device according to claim 57, wherein the data transmission channel comprises one or more of:
a data transmission channel for a terminal device;
a data transmission channel for a first terminal device group; or
a data transmission channel for a first service.

59. The communication device according to any one of claims 49 to 55, wherein the first communication device is a network element in a core network, and the second communication device is a terminal device.

60. The communication device according to claim 59, wherein the first message is a registration accept message.

61. The communication device according to claim 59 or 60, wherein the second information comprises a correspondence between the first information and the radio connection establishment cause.

62. The communication device according to any one of claims 49 to 55, wherein the first communication device is a terminal device, and the second communication device is an access network device.

63. The communication device according to claim 62, wherein the first message is a radio connection establishment request message.

64. The communication device according to claim 62 or 63, wherein the second information comprises the radio connection establishment cause corresponding to the first information.

65. A communication device, comprising a transceiver, a memory, and a processor, wherein the memory is configured to store a program, and the processor is configured to call the program in the memory to cause the communication device to perform the method according to any one of claims 1 to 32.

66. An apparatus, comprising a processor configured to call a program from a memory, to cause the apparatus to perform the method according to any one of claims 1 to 32.

67. A chip, comprising a processor configured to call a program from a memory, to cause a device equipped with the chip to perform the method according to any one of claims 1 to 32.

68. A computer-readable storage medium, having a program stored thereon, wherein the program causes a computer to perform the method according to any one of claims 1 to 32.

69. A computer program product, comprising a program, wherein the program causes a computer to perform the method according to any one of claims 1 to 32.

70. A computer program, wherein the computer program causes a computer to perform the method according to any one of claims 1 to 32.
